# DEMANDE DE BREVET EUROPEEN

(11) **EP 4 553 012 A1**
(43) Date de publication de la demande: **14.05.2025**
(21) Numéro de dépôt: 24211572.3
(22) Date de dépôt: 07.11.2024
(51) Int. Cl.: B65G 27/06, B65G 27/08, B65G 27/20, B65G 27/24

(54) **DISPOSITIF DE TRANSFERT À SOLE VIBRANTE ÉQUILIBRÉE**

(30) Priorité: 08.11.2023 FR 2312114
(71) Demandeur: Sinex Industrie, 16710 Saint-Yrieix-sur-Charente (FR)
(72) Inventeur: VIGIER, Loic, 16000 Angoulême (FR); DUPONT, Benjamin, 17210 MONTLIEU-LA-GARDE (FR); BONAUDET, Eric, 16000 ANGOULEME (FR)
(74) Mandataire: Aquinov

(57) **Abrégé**

L'invention porte sur un dispositif de transfert (1) à sole vibrante pour le transfert de pièces comprenant un ensemble plateau (2) comprenant une sole (6) destinée à recevoir les pièces à transférer, des moyens vibrateurs (4) aptes à mettre en vibration ladite sole (6), et un ensemble stabilisateur (3) comprenant un bâti (10) destiné au support des moyens vibrateurs (4).

Selon l'invention, l'ensemble plateau (2) comporte un centre de gravité plateau (Gp) sensiblement aligné verticalement selon l'axe Z avec le centre de gravité stabilisateur (Gs) de l'ensemble stabilisateur (3).

## Description

La présente invention concerne le domaine technique des dispositifs de transfert à sole vibrante pour le transfert de pièces, notamment le transfert de pièces à stabilité précaire.

Dans de nombreux domaines et plus particulièrement en verrerie, les pièces sont fabriquées dans des installations travaillant 24 heures sur 24 pendant plusieurs années. C'est le cas par exemple de pièces en verre telles que des bouteilles, des flacons, des verres. Ces pièces sont mises en forme puis passent dans des arches de recuisson pour supprimer les contraintes résiduelles induites lors de la mise en forme. Les pièces sont fabriquées en grand nombre et déposées en sortie sur des tapis de grande largeur.

Il convient alors de les transférer vers d'autres convoyeurs et des dispositifs de transfert à sole vibrante peuvent être utilisés. Les dispositifs de transfert existants comprennent notamment un plateau à savoir une sole apte à vibrer et les vibrations permettent le convoyage des pièces d'un poste de travail à un autre.

Les dispositifs vibratoires connus comprennent une sole mise en vibration par des moyens adaptés, généralement électromagnétiques, et sur laquelle les pièces sont poussées par le tapis. Les moyens de mise en vibration de la sole reposent sur un bâti.

A l'usage, les vibrations peuvent endommager la sole et notamment au niveau des points d'ancrage de la sole sur le bâti.

De tels sites de production demandent d'adapter la production et l'architecture du site et des postes de travail en fonction de la demande.

L'invention vise à pallier ces inconvénients et propose un dispositif de transfert amélioré, facilement modulable, transportable et réglable.

L'invention porte alors sur un dispositif de transfert à sole vibrante pour le transfert de pièces comprenant un ensemble plateau comprenant une sole destinée à recevoir les pièces à transférer, des moyens vibrateurs aptes à mettre en vibration ladite sole, et un ensemble stabilisateur comprenant un bâti destiné au support des moyens vibrateurs et de la masse.

Selon l'invention, l'ensemble plateau comporte un centre de gravité plateau sensiblement aligné verticalement selon l'axe Z avec le centre de gravité stabilisateur de l'ensemble stabilisateur.

La mise en oeuvre de deux ensembles compatibles permet de proposer une modularité du dispositif de transfert à sole vibrante. Le principe de l'invention repose ainsi sur un alignement vertical de deux ensembles modulables liés verticalement par des éléments ressorts.

Le dispositif de transfert selon l'invention est ainsi un système mobile, comprenant deux ensembles liés par des éléments ressorts, et vibré par une base magnétique.

Un tel dispositif trouve avantageusement sa place pour le convoyage de contenants en verre tels que des bouteilles, des bocaux ou encore des flacons de toutes tailles et dimensions.

Ce dispositif est avantageusement moins couteux et plus économique avec un temps de montage et de réglage réduit, un nombre de pièces diminué.

Selon une caractéristique de l'invention, le bâti comprend deux bras portant un support pour les moyens vibrateurs et une masse. Former le bâti en trois parties permet d'en distinguer les tâches. Le support est destiné à porter les moyens vibrateurs. Les bras permettent de porter le support apportant une stabilité pour supporter l'ensemble. Et, la masse peut être définie de manière à faire coïncider verticalement le centre de gravité stabilisateur de l'ensemble stabilisateur avec l'axe Z par lequel passe le centre de gravité plateau de l'ensemble plateau.

Selon une caractéristique de l'invention, les bras comprennent une partie en renfoncement vers la masse. Créer un renfoncement des bras permet, d'une part, de réduire l'encombrement du bâti de l'ensemble stabilisateur, et d'autre part, de faciliter l'accès à la sole, un opérateur pouvant s'approcher plus près. Des excroissances, situées au plus bas, servent de pieds permettant de supporter l'ensemble.

Selon une autre caractéristique de l'invention, les bras comprennent des pieds aptes à faire tenir le bâti en équilibre à la verticale. La possibilité d'entreposer le bâti à la verticale est très utile notamment au cours de certaines opérations telles que le transport et le montage par exemple.

Selon une forme de réalisation de l'invention, l'ensemble stabilisateur est une pièce monobloc. Prévoir l'ensemble stabilisateur en une pièce monobloc permet de faciliter sa production. Le centre de gravité stabilisateur de l'ensemble stabilisateur est ainsi défini et seul un ensemble plateau comprenant un centre de gravité plateau pouvant s'aligner sera compatible avec la pièce. Cette forme de réalisation trouve notamment son avantage lorsque plusieurs dispositifs de transfert sensiblement identiques sont mis en oeuvre. La manutention de tels dispositifs de transfert est ainsi facilitée.

Selon une autre caractéristique de l'invention, le centre de gravité stabilisateur est situé dans un cercle de diamètre compris entre 0 et 60 mm autour de l'axe Z passant par le centre de gravité plateau. La mise en oeuvre d'une telle tolérance permet de minimiser l'impact de potentiel défaut de fabrication des pièces qui composent le dispositif de transfert tout en gardant le principe assurant la stabilité des deux ensembles.

Selon une forme de réalisation de l'invention, la sole comporte un élément de jonction réalisé en plusieurs tôles éjectables, chacune des tôles éjectables étant en matériau ferromagnétique et le dispositif de transfert comprenant une liaison magnétique. Cet élément de jonction est solidaire de la sole et se prolonge à proximité immédiate du tapis destiné à être en vis-à-vis de l'élément de jonction, exactement dans le même plan en sorte d'assurer une continuité. La liaison entre l'élément de jonction et la sole est particulière en ce sens qu'elle est de type magnétique. Ainsi, chaque tôle éjectable est en matériau ferromagnétique, par exemple de l'acier et subit l'action d'aimants liés à ladite sole. De fait, sous l'action d'un corps étranger solidaire du tapis par exemple, corps étranger qui viendrait à heurter une des tôles éjectables, celle-ci peut se soulever pour ne pas être dégradée. L'attraction magnétique assure la remise en place de la tôle éjectable dès l'obstacle passé. L'élément de jonction permet de pouvoir récupérer de potentiels bris de verre et empêche que les pièces se coincent ou gênent le mouvement des autres pièces.

Selon une autre forme de réalisation de l'invention, le dispositif de transfert comprend en outre au moins deux amortisseurs situés sur l'ensemble stabilisateur. La mise en oeuvre d'amortisseurs permet d'augmenter l'isolation de l'ensemble stabilisateur. Selon une forme de réalisation, un amortisseur est un plot en élastomère. De tels amortisseurs n'ont pas d'influence majeure sur la définition des centres de gravité plateau et stabilisateur.

Selon une caractéristique de l'invention, les moyens vibrateurs comprennent des moyens électromagnétiques avec un socle solidaire du bâti incluant une bobine, l'axe de cette bobine étant incliné et entraînant une armature montée sur des lames élastiques, ladite armature recevant la sole, l'armature étant compris pour la définition du centre de gravité plateau de l'ensemble plateau et le socle et la bobine étant compris pour la définition du centre de gravité stabilisateur de l'ensemble stabilisateur. Selon cette forme de réalisation des moyens vibrateurs, chaque armature est comprise pour le calcul du centre de gravité plateau et chaque socle et bobine sont pris en compte pour définir le centre de gravité stabilisateur. En effet, pour garder le principe de deux ensembles liés par un ressort, il est primordial de ne garder que deux ensembles. De nombreux essais ont montré l'importance de prise en compte de chaque élément comprenant une masse non négligeable pour définir les deux centres de gravité plateau et stabilisateur.

Selon une autre caractéristique de l'invention, la sole comprend un revêtement anti-usure et isophonique. Ce revêtement évite l'usure de la sole et surtout le marquage des produits par l'aluminium lors du transfert par vibration des pièces. Ce revêtement est aussi isophonique réduisant ainsi les bruits induits.

L'invention porte également sur une installation de transfert comprenant au moins deux dispositifs de transfert selon l'invention, lesdits dispositifs de transfert étant juxtaposés. Selon l'utilisation et la taille de l'installation, différents dispositifs de transfert selon l'invention sont mis les uns à côté des autres afin de créer un chemin de transfert.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'un exemple de dispositif de transfert selon l'invention,
[Fig.2] est une vue en perspective d'un autre exemple de réalisation du dispositif de transfert selon l'invention,
[Fig.3] est une vue de côté du dispositif de transfert de la figure 1,
[Fig. 4] est une vue du dessus du dispositif de transfert de la figure 1,
[Fig.5] est une vue du dessous du dispositif de transfert de la figure 1,

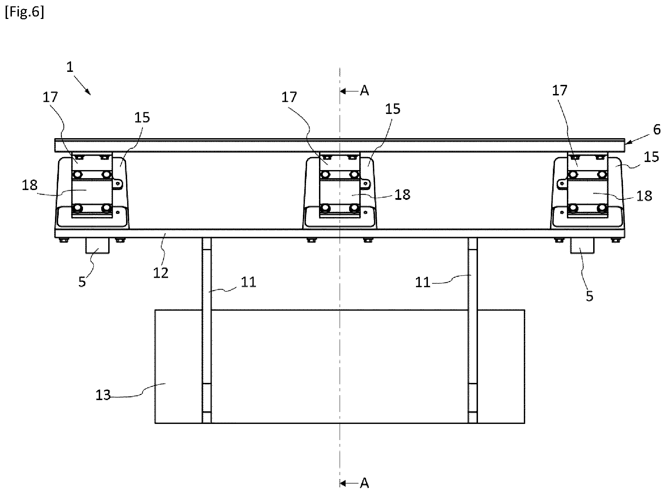

[Fig.6] est une vue du devant du dispositif de transfert de la figure 1 présentant un plan de coupe AA, et
[Fig.7] est une vue en semi-coupe selon AA de la figure 6, et
[Fig.8] est une vue éclatée en semi-coupe selon AA de la figure 6.

Il est à noter que sur ces figures les éléments structurels et/ou fonctionnels communs aux différentes variantes peuvent présenter les mêmes références. Une base orthogonale (X,Y,Z) apparaissant sur certaines figures est valable pour toutes les figures.

L'invention vise à proposer un dispositif de transfert à sole vibrante amélioré, facilement modulable, réglable et transportable.

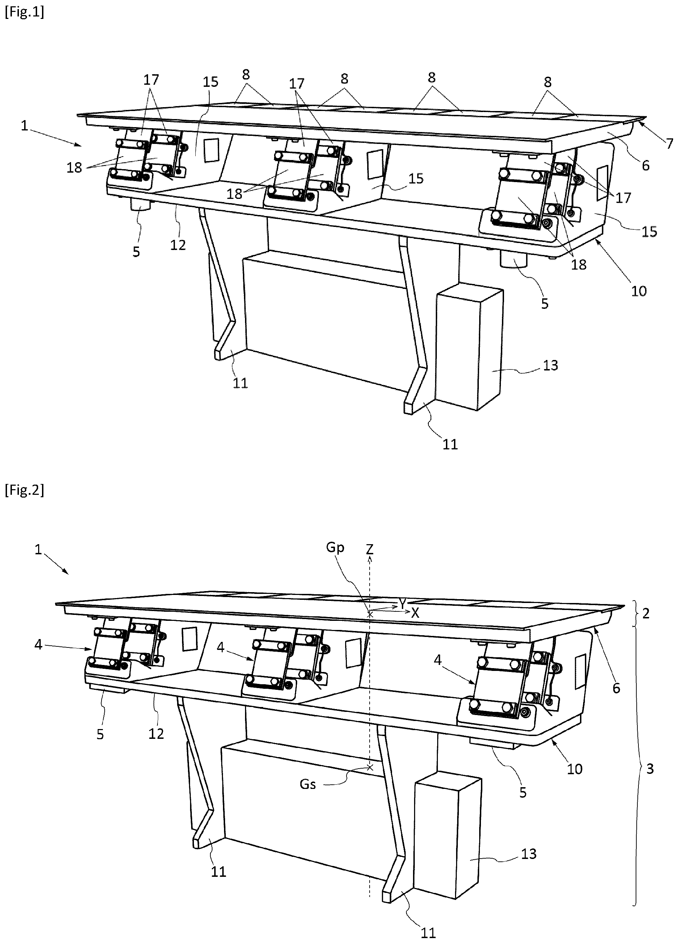

A ces fins, un dispositif de transfert désigné par la référence 1 tel qu'illustré aux figures 1 et 2 comprend un ensemble plateau 2 et un ensemble stabilisateur 3, liés entre eux par des moyens vibrateurs 4 aptes à mettre en vibration l'ensemble plateau 2.

Le dispositif de transfert 1 selon l'invention est donc régie par le principe de deux ensembles liés par un élément ressort. Un premier ensemble, l'ensemble plateau 2 est destiné à recevoir des pièces (non représentées), notamment à stabilité précaire, à transférer aux moyens de vibrations produites par les moyens vibrateurs 4 et un deuxième ensemble, l'ensemble stabilisateur 3 est destiné à porter les moyens vibrateurs 4.

Les figures 1 et 2 montrent deux exemples de réalisation de l'invention. D'autres formes de réalisation et notamment de formes et dimensions non représentées sont compatibles avec l'invention.

De plus, sur la figure 1, quatre amortisseurs 5 sont placés sur l'ensemble stabilisateur 3 à proximité des moyens vibrateurs 4. Selon la forme de réalisation des moyens vibrateurs 4 et de l'ensemble stabilisateur 3, le nombre d'amortisseurs varie.

Selon les formes de réalisation illustrées aux figures 1 et 2, le dispositif de transfert 1 est sensiblement symétrique par rapport au plan (Y,Z). C'est donc sur ce plan que se situent le centre de gravité plateau Gp de l'ensemble plateau 2 et le centre de gravité stabilisateur Gs de l'ensemble stabilisateur 3. Pour simplifier, l'axe Z est placé au niveau des centres de gravité respectifs plateau Gp et stabilisateur Gs. Selon l'invention, les centres de gravité plateau Gp et stabilisateur GS sont alignés verticalement.

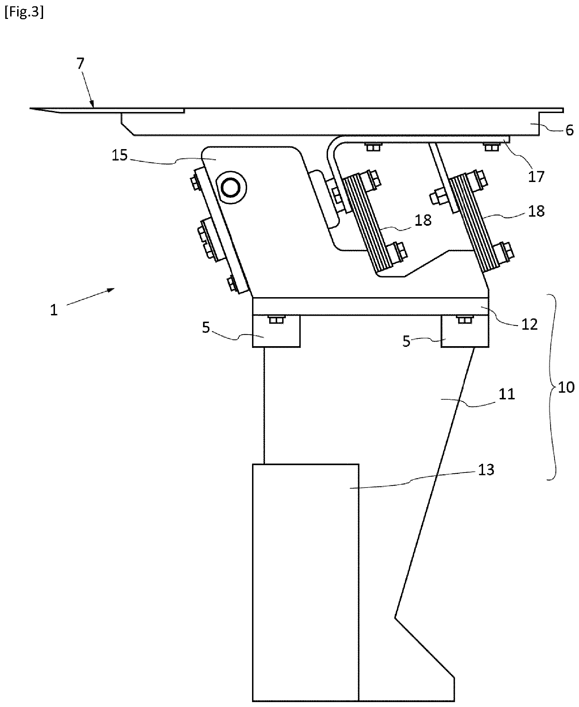

Ainsi selon cette forme de réalisation illustrée aux figures 1 et 3, les deux ou quatre amortisseurs 5 sont situés deux à deux symétriquement par rapport au plan (Y,Z) de manière à garder l'équilibre prédéfini.

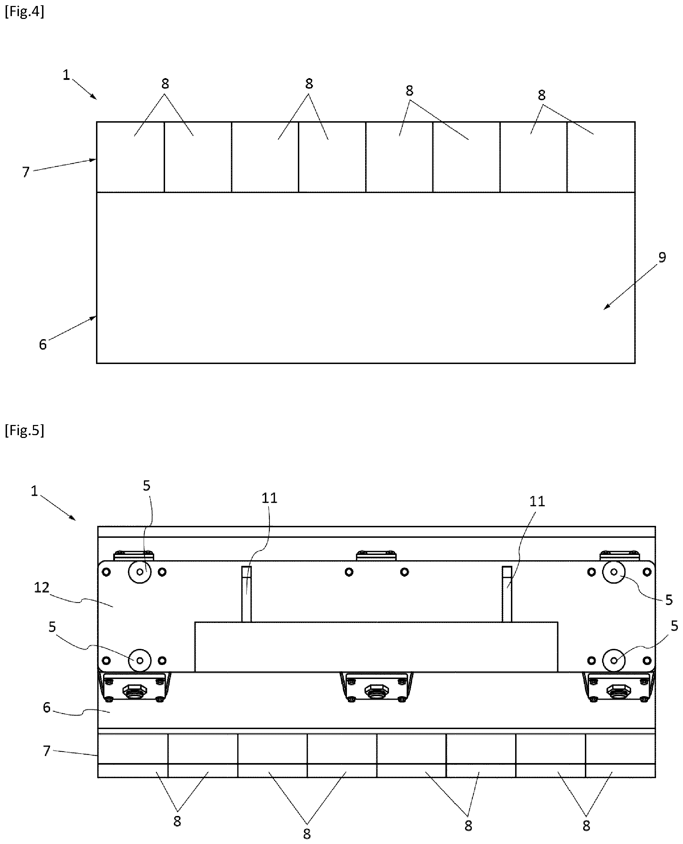

L'ensemble plateau 2 visible du dessus sur la figure 4 comprend une sole 6 comportant un élément de jonction 7, réalisé en plusieurs tôles éjectables 8, et les armatures mobiles 17.

Selon cette forme de réalisation, l'ensemble plateau 2 comprend également une liaison magnétique et chaque tôle éjectable 8 étant en matériau ferromagnétique.

Selon la forme de réalisation illustrée, la sole 6 comprend un revêtement 9 anti-usure et isophonique.

L'ensemble stabilisateur 3, visible notamment avec la vue du dessous de la figure 5, comprend un bâti 10 comportant deux bras 11 portant un support 12 pour les moyens vibrateurs 4 et une masse 13. Selon la forme de réalisation des moyens vibrateurs 4, certains éléments des moyens vibrateurs sont compris dans la définition du centre de gravité plateau Gp de l'ensemble plateau 2 et du centre de gravité stabilisateur Gs de l'ensemble stabilisateur 3.

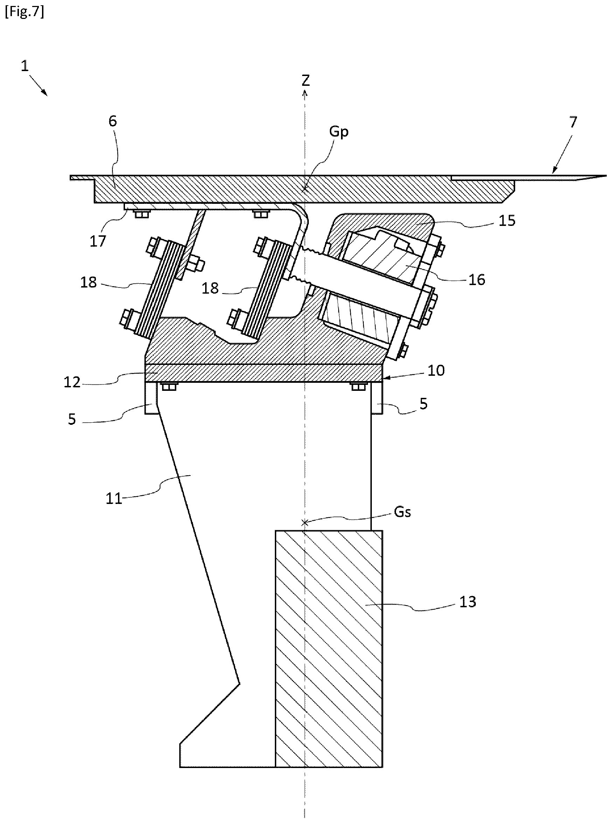

La vue de côté de la figure 3 et la vue de semi coupe de la figure 7 montrent l'architecture choisie pour cette forme de réalisation.

Pour définir la forme de poids nécessaire de l'ensemble stabilisateur 3, le centre de gravité plateau Gp de l'ensemble plateau 2 est calculé. Il s'agit alors que le centre de gravité stabilisateur Gs de l'ensemble stabiliseur 3 soit aligné avec ce point selon l'axe Z. La masse 13 est ainsi choisit pour avoir cet équilibre. Selon la forme de réalisation illustrée, les bras 11 comprennent une portion de renfoncement qui permet entre autres une approche manuelle facilitée vers la sole 6. Le support 12 pour les moyens vibrateurs 4 comprend un centre de gravité propre. L'ajout de la masse 13 et des bras 11 permet de déplacer ce centre de gravité afin de le faire coïncider avec l'axe Z passant par le centre de gravité plateau Gp de l'ensemble plateau 2. Selon la forme de réalisation illustrée, la masse 13 a la forme d'un bloc pavé légèrement en retrait des bras 11.

D'autres formes de réalisation et d'emplacement de la masse 13 sont possibles et compatibles avec l'invention avec le centre de gravité stabilisateur Gs de l'ensemble stabiliseur 3 aligné selon l'axe Z passant par le centre de gravité plateau Gp de l'ensemble plateau 2.

Il existe une tolérance pour le centre de gravité stabilisateur Gs de l'ensemble stabilisateur 3 du dispositif de transfert 1. Selon l'invention, le centre de gravité stabilisateur Gs de l'ensemble stabilisateur 3 est situé dans un cercle de diamètre compris entre 0 et 60 mm autour de l'axe Z passant par le centre de gravité plateau Gp de l'ensemble plateau 2.

Selon une forme de réalisation, l'ensemble stabilisateur 3 est une pièce monobloc. Le bâti 10 peut ainsi être prévu en amont de la conception du dispositif de transfert 1. Lorsque le centre de gravité plateau Gp de l'ensemble plateau 2 est défini, le bâti 10 est conçu de manière à aligner le centre de gravité stabilisateur Gs de l'ensemble stabilisateur 3 avec le centre de gravité plateau Gp selon l'axe Z de l'ensemble plateau 2. Selon cette forme de réalisation plusieurs réalisations de l'ensemble plateau 2 sont compatibles avec un tel bâti 10.

De manière générale, l'ensemble plateau 2 et l'ensemble stabilisateur 3 sont compatibles respectivement avec différentes versions.

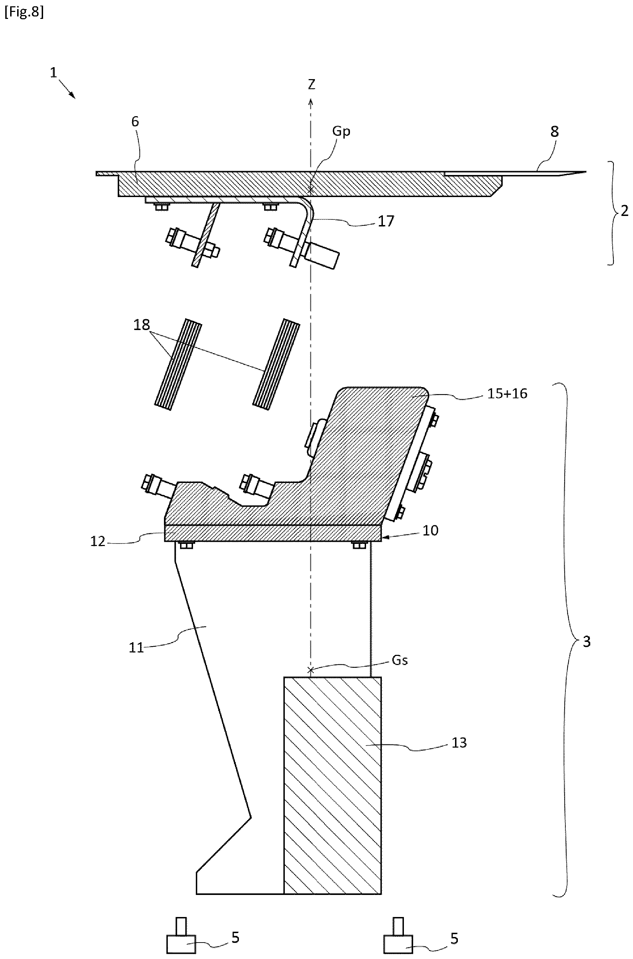

Selon la forme de réalisation illustrée notamment visibles aux figures 7 et 8, les moyens vibrateurs 4 comprennent des systèmes électromagnétiques comportant un socle 15 solidaire du bâti 10 incluant une bobine 16 électromagnétique, l'axe de cette bobine étant incliné. La bobine 16 entraîne une armature 17 montée sur des lames 18 élastiques. Selon la forme de réalisation illustrée, le dispositif de transfert 1 comprend trois systèmes électromagnétiques. Ainsi trois armatures 17 reçoivent la sole 6.

Selon cette forme de réalisation illustrée, de tels moyens vibrateur 4 comporte un socle 15 solidaire du support 11, par exemple aux moyens de boulons et une bobine 16 comprenant une masse non négligeable. Le socle 15 et la bobine 16 sont donc compris pour la définition du centre de gravité stabilisateur Gs de l'ensemble stabilisateur 3. D'autres formes de réalisation des moyens vibrateurs 4 sont compatibles avec l'invention.

Selon une forme de réalisation de l'invention, au moins un dispositif de transfert 1 permet de former une installation de transfert Selon les besoins de l'installation de transfert, plusieurs dispositifs de transfert 1 selon l'invention peuvent se juxtaposer pour former une installation de transfert de plus grande dimension.

Bien entendu, diverses autres modifications peuvent être apportées à l'invention dans le cadre des revendications annexées.

## Revendications

1. Dispositif de transfert (1) à sole vibrante équilibrée pour le transfert de pièces comprenant un ensemble plateau (2) comprenant une sole (6) destinée à recevoir les pièces à transférer, des moyens vibrateurs (4) aptes à mettre en vibration ladite sole (6), et un ensemble stabilisateur (3) comprenant un bâti (10) destiné au support des moyens vibrateurs (4), **caractérisé en ce que** l'ensemble plateau (2) comporte un centre de gravité plateau (Gp) sensiblement aligné verticalement selon l'axe Z avec le centre de gravité stabilisateur (Gs) de l'ensemble stabilisateur (3).

2. Dispositif de transfert (1) selon la revendication précédente dans lequel le bâti (10) comprend deux bras (11) portant un support (12) pour les moyens vibrateurs (4) et une masse (13).

3. Dispositif de transfert (1) selon la revendication précédente dans lequel les bras (11) comprennent une partie en renfoncement vers la masse (13).

4. Dispositif de transfert (1) selon la revendication précédente dans lequel les bras comprennent des pieds aptes à faire tenir le bâti en équilibre à la verticale.

5. Dispositif de transfert (1) selon l'une des revendications précédentes dans lequel l'ensemble stabilisateur (3) est une pièce monobloc.

6. Dispositif de transfert (1) selon l'une des revendications précédentes dans lequel le centre de gravité stabilisateur (Gs) est situé dans un cercle de diamètre compris entre 0 et 60 mm autour de l'axe Z passant par le gravité plateau (Gp).

7. Dispositif de transfert (1) selon l'une des revendications précédentes dans lequel la sole (6) comporte un élément de jonction (7) réalisé en plusieurs tôles éjectables (8), faites d'un matériau ferromagnétique, et le dispositif de transfert (1) comprenant une liaison magnétique.

8. Dispositif de transfert (1) selon l'une des revendications précédentes comprenant en outre au moins un amortisseur (5) situé sur l'ensemble stabilisateur (3).

9. Dispositif de transfert (1) selon l'une des revendications précédentes dans lequel les moyens vibrateurs (4) comprennent des moyens électromagnétiques avec un socle (15) solidaire du bâti (10) incluant une bobine (16), l'axe de cette bobine (16) étant incliné et entraînant une armature (17) montée sur des lames (18) élastiques, ladite armature (17) recevant la sole, l'armature (17) étant compris pour la définition du centre de gravité plateau (Gp) de l'ensemble plateau (2) et le socle (15) et la bobine (16) étant compris pour la définition du centre de gravité stabilisateur (Gs) de l'ensemble stabilisateur (3).

10. Dispositif de transfert (1) selon l'une des revendications précédentes dans lequel la sole (6) comprend un revêtement (9) anti-usure et isophonique.

11. Installation de transfert comprenant au moins deux dispositifs de transfert (1) selon l'une quelconque des revendications précédentes, lesdits dispositifs de transfert (1) étant juxtaposés.
